# EUROPEAN PATENT APPLICATION

(11) **EP 3 588 881 A1**
(43) Date of publication of application: **01.01.2020**
(21) Application number: 19177144.3
(22) Date of filing: 28.05.2019
(51) Int. Cl.: H04L 12/879, H04L 12/801, H04L 12/863, H04L 12/935, H04L 12/861, H04L 12/851

(54) **TECHNOLOGIES FOR REORDERING NETWORK PACKETS ON EGRESS**

(30) Priority: 29.06.2018 US 201816023743
(71) Applicant: INTEL Corporation, Santa Clara, CA 95054 (US)
(72) Inventor: RICHARDSON, Bruce, Shannon, V14P898 (IE); CUNNINGHAM, Andrew, Ennis, V95 R9NW (IE); LECKEY, Alexander J., Kildare, W23 DN24 (IE); RYAN, Brendan, Limerick, V94Y64R (IE); FLEMING, Patrick, Slatt Wolfhill, R14 W649 (IE); CONNOR, Patrick, Beaverton, OR Oregon 97007 (US); HUNT, David, Meelick, V9 PR3W (IE); CHILIKIN, Andrey, Limerick, V94 E1CN (IE); MACNAMARA, Chris, Limerick, V94X65T (IE)
(74) Representative: 2SPL Patentanwälte PartG mbB

(57) **Abstract**

Technologies for reordering network packets on egress include a network interface controller (NIC) configured to associate a received network packet with a descriptor, generate a sequence identifier for the received network packet, and insert the generated sequence identifier into the associated descriptor. The NIC is further configured to determine whether the received network packet is to be transmitted from a compute device associated with the NIC to another compute device and insert, in response to a determination that the received network packet is to be transmitted to the another compute device, the descriptor into a transmission queue of descriptors. Additionally, the NIC is configured to transmit the network packet based on position of the descriptor in the transmission queue of descriptors based on the generated sequence identifier. Other embodiments are described herein.

## Description

### BACKGROUND

Modern computing devices have become ubiquitous tools for personal, business, and social uses. As such, many modern computing devices are capable of connecting to various data networks, including the Internet, to transmit and receive data communications over the various data networks at varying rates of speed. To facilitate communications between computing devices, the data networks typically include one or more network computing devices (e.g., compute servers, storage servers, etc.) to route communications (e.g., via switches, routers, etc.) that enter/exit a network (e.g., north-south network traffic) and between network computing devices in the network (e.g., east-west network traffic). In present packet-switched network architectures, data is transmitted in the form of network packets between networked computing devices. At a high level, data is packetized into a network packet at one computing device and the resulting packet transmitted, via a transmission device (e.g., a network interface controller (NIC) of the computing device), to another computing device over a network.

However, certain network infrastructures, such as data centers, may include tens of thousands or more of such computing nodes, making transmission and reception of the network packets in sequential order difficult at best. As such, various out-of-order, end-to-end protocols have been implemented to manage transmitting and receiving the potentially thousands of network packets that may be in flight at any given time. For example, to handle such large out-of-order network traffic volume, microarchitecture technologies have been implemented to provide hardware level end-to-end retry protocols to leverage simply accepting the next packet in a sequence of network packets, regardless or the order in which they are received. In some cases, software has been utilized to apply reliability by resequencing headers of the network packets to restore sequential order without hardware checking; however, such software-based resequencing is not typically applicable to direct data placement operations or atomic operations. Similarly, transmission control protocol (TCP) supports selective reject capabilities; however, such use cases typically depend on reassembly of the received out-of-order network packets in host memory, which typically introduces overhead and latency.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a system for reordering network packets on egress that includes a source compute device, a destination compute device, and an intermediary compute device communicatively coupled via a network;
FIG. 2 is a simplified block diagram of at least one embodiment of the intermediary compute device of the system of FIG. 1;
FIG. 3 is a simplified block diagram of at least one embodiment of an environment of the intermediary compute device of FIGS. 1 and 2;
FIG. 4 is a simplified flow diagram of at least one embodiment of a method for processing a network packet on ingress that may be executed by the intermediary compute device of FIGS. 1-3; and
FIG. 5 is a simplified flow diagram of at least one embodiment of a method for managing the transmission of a network packet on egress that may be executed by the intermediary compute device of FIGS. 1-3.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one of A, B, and C" can mean (A); (B); (C): (A and B); (A and C); (B and C); or (A, B, and C). Similarly, items listed in the form of "at least one of A, B, or C" can mean (A); (B); (C): (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage media, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

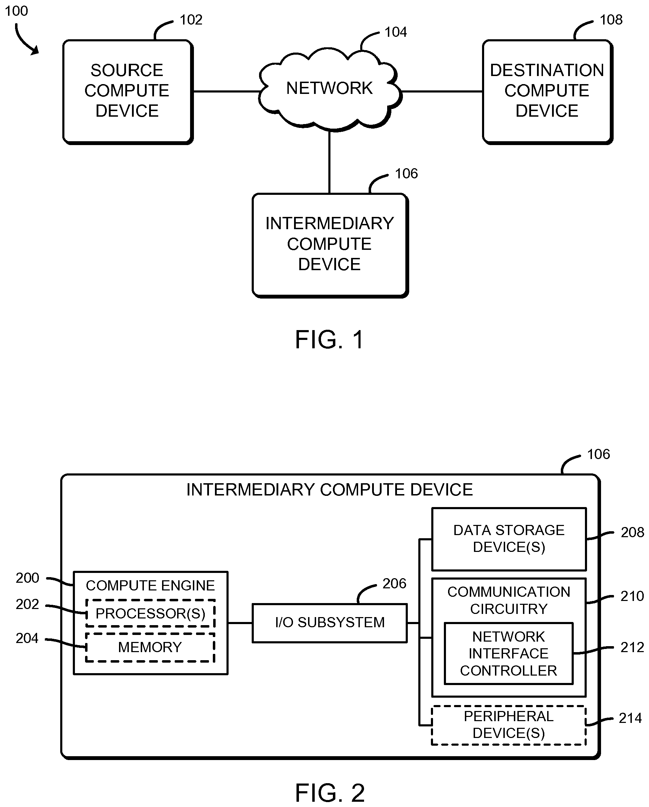

Referring now to FIG. 1, in an illustrative embodiment, a system 100 for reordering network packets on egress includes a source compute device 102, an intermediary compute device 106, and a destination compute device 108, each of which are communicatively coupled via a network 104. While illustratively shown as having a single source compute device 102, a single intermediary compute device 106, and a single destination compute device 108, the system 100 may include multiple compute devices which may be identified as source, intermediary, or destination compute devices, depending on the path of a particular network packet. Accordingly, it should be appreciated that the source compute device 102, the intermediary compute device 106, and the destination compute device 108 have been illustratively designated herein as being one of a "source," an "intermediary," and a "destination" for the purposes of providing clarity to the description and that the source compute device 102, the intermediary compute device 106, and/or the destination compute device 108 may be capable of performing any of the functions described herein. It should be further appreciated that the source compute device 102, the intermediary compute device 106, and/or the destination compute device 108 may reside in the same data center or high-performance computing (HPC) environment. In other words, one or more of the source compute device 102 the intermediary compute device 106, and the destination compute device 108 may reside in the same network 104 connected via one or more interconnects.

In use, the source compute device 102 transmits network traffic (e.g., network packets, frames, etc.) to the destination compute device 108 over the network 104 via the intermediary compute device 106. In other words, the intermediary compute device 106 receives network packets from the source compute device 102, performs some level of processing thereon, and then transmits the processed network packets to the destination compute device 108. It should be appreciated that each of the source compute device 102 the intermediary compute device 106, and the destination compute device 108 may transmit/receive network traffic over the network, as applicable.

Upon receipt of a network packet, the intermediary compute device 106, or more particularly a network interface controller (NIC) 212 of the intermediary compute device 106, stores at least a portion of the data associated with the received network packet into a data buffer (e.g., via a direct memory access (DMA) operation). Additionally, as will be described in further detail below, the NIC 212 configures a descriptor for each received network packet. It should be appreciated that each descriptor includes information describing a network packet, as well as packet processing/offload information, as applicable. Each descriptor includes information usable to identify a physical address of the data buffer in host memory where the network packet data has been stored (e.g., a pointer to a data buffer). The NIC 212 is additionally configured to generate a sequence identifier for each received network packet and, unlike present technologies, include the sequence identifier in a designated field of the descriptor associated with the respective network packet. The sequence identifier may be any type of data usable to identify an order of a received network packet relative to other previously received and/or future received network packets, such as a timestamp, a sequence number, a value of an incremented counter, etc. In some embodiments, the sequence identifier may be based on a characteristic of the network packet, such as a flow or workload type, a source, a destination, etc.

The NIC 212 may then perform one or more processing operations on at least a portion of the data associated with a received network packet. Upon completion of the processing operation(s), the NIC 212 is further configured to schedule the processed network packet for transmission (e.g., to the destination compute device 108) and enqueue the corresponding descriptors in a transmission descriptor queue. Accordingly, unlike present techniques, the NIC 212 is configured to reorder the enqueued network packet descriptors based on their corresponding sequence identifiers and transmit the network packets based on the order of the descriptors in the transmission descriptor queue.

In other words, in the same way as the NIC 212 can provide sequencing metadata upon receipt, the sequence identifier can be retrieved by the NIC 212 again on transmission, such that the NIC 212 can perform the reordering of the network packets in the transmission queue before the network packets are transmitted. It should be appreciated that, by including the sequence identifier in the descriptor, the reordering on transmission can be done on the transmission descriptor queue (i.e., without forcing the NIC 212 to fetch the network packet first). Accordingly, since the reordering is being performed on the descriptors, not the network packets themselves, communication bandwidth (e.g., Peripheral Component Interconnect (PCI) bandwidth) and any additional storage as may be required on the NIC 212 to store the fetched network packet can be saved. While illustratively described herein as being performed by the NIC 212, it should be appreciated that the reordering may be performed by any other device, such as an I/O device, an accelerator, etc., during an offload operation.

The intermediary compute device 106 may be embodied as any type of computation or computer device capable of performing the functions described herein, including, without limitation, a computer, a server (e.g., stand-alone, rack-mounted, blade, etc.), a sled (e.g., a compute sled, an accelerator sled, a storage sled, a memory sled, etc.), an enhanced or smart NIC (e.g., a host fabric interface (HFI)), a network appliance (e.g., physical or virtual), a web appliance, a distributed computing system, a processor-based system, and/or a multiprocessor system. It should be appreciated that the functions described herein may be performed on any bump-in-the-wire applications with one-to-one ingress/egress ports (e.g., a gateway, an Internet Protocol Security (IPSec) appliance, etc.), but not all packet processing workloads (e.g., routers or switches that distribute traffic to multiple ports).

Referring now to FIG. 2, an illustrative intermediary compute device 106 is shown. The illustrative intermediary compute device 106 includes a compute engine 200, an I/O subsystem 206, one or more data storage devices 208, communication circuitry 210, and, in some embodiments, one or more peripheral devices 214. It should be appreciated that the intermediary compute device 106 may include other or additional components, such as those commonly found in a typical computing device (e.g., various input/output devices and/or other components), in other embodiments. Additionally, in some embodiments, one or more of the illustrative components may be incorporated in, or otherwise form a portion of, another component.

The compute engine 200 may be embodied as any type of device or collection of devices capable of performing the various compute functions as described herein. In some embodiments, the compute engine 200 may be embodied as a single device such as an integrated circuit, an embedded system, a field-programmable-array (FPGA), a system-on-a-chip (SOC), an application specific integrated circuit (ASIC), reconfigurable hardware or hardware circuitry, or other specialized hardware to facilitate performance of the functions described herein. Additionally, in some embodiments, the compute engine 200 may include, or may be embodied as, one or more processors 202 (i.e., one or more central processing units (CPUs)) and memory 204.

The processor(s) 202 may be embodied as any type of processor(s) capable of performing the functions described herein. For example, the processor(s) 202 may be embodied as one or more single-core processors, multi-core processors, digital signal processors (DSPs), microcontrollers, or other processor(s) or processing/controlling circuit(s). In some embodiments, the processor(s) 202 may be embodied as, include, or otherwise be coupled to an FPGA, an ASIC, reconfigurable hardware or hardware circuitry, or other specialized hardware to facilitate performance of the functions described herein.

The memory 204 may be embodied as any type of volatile or non-volatile memory or data storage capable of performing the functions described herein. It should be appreciated that the memory 204 may include main memory (i.e., a primary memory) and/or cache memory (i.e., memory that can be accessed more quickly than the main memory). Volatile memory may be a storage medium that requires power to maintain the state of data stored by the medium. Non-limiting examples of volatile memory may include various types of random access memory (RAM), such as dynamic random access memory (DRAM) or static random access memory (SRAM).

The compute engine 200 is communicatively coupled to other components of the intermediary compute device 106 via the I/O subsystem 206, which may be embodied as circuitry and/or components to facilitate input/output operations with the processor 202, the memory 204, and other components of the intermediary compute device 106. For example, the I/O subsystem 206 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some embodiments, the I/O subsystem 206 may form a portion of a SoC and be incorporated, along with one or more of the processor 202, the memory 204, and other components of the intermediary compute device 106, on a single integrated circuit chip.

The one or more data storage devices 208 may be embodied as any type of storage device(s) configured for short-term or long-term storage of data, such as, for example, memory devices and circuits, memory cards, hard disk drives, solid-state drives, or other data storage devices. Each data storage device 208 may include a system partition that stores data and firmware code for the data storage device 208. Each data storage device 208 may also include an operating system partition that stores data files and executables for an operating system.

The communication circuitry 210 may be embodied as any communication circuit, device, or collection thereof, capable of enabling communications between the intermediary compute device 106 and other computing devices, such as the source compute device 102, as well as any network communication enabling devices, such as an access point, network switch/router, etc., to allow communication over the network 104. Accordingly, the communication circuitry 210 may be configured to use any one or more communication technologies (e.g., wireless or wired communication technologies) and associated protocols (e.g., Ethernet, Bluetooth®, Wi-Fi®, WiMAX, LTE, 5G, etc.) to effect such communication.

It should be appreciated that, in some embodiments, the communication circuitry 210 may include specialized circuitry, hardware, or combination thereof to perform pipeline logic (e.g., hardware algorithms) for performing the functions described herein, including processing network packets (e.g., parse received network packets, determine destination computing devices for each received network packets, forward the network packets to a particular buffer queue of a respective host buffer of the intermediary compute device 106, etc.), performing computational functions, etc.

In some embodiments, performance of one or more of the functions of communication circuitry 210 as described herein may be performed by specialized circuitry, hardware, or combination thereof of the communication circuitry 210, which may be embodied as a SoC or otherwise form a portion of a SoC of the intermediary compute device 106 (e.g., incorporated on a single integrated circuit chip along with a processor 202, the memory 204, and/or other components of the intermediary compute device 106). Alternatively, in some embodiments, the specialized circuitry, hardware, or combination thereof may be embodied as one or more discrete processing units of the intermediary compute device 106, each of which may be capable of performing one or more of the functions described herein.

The illustrative communication circuitry 210 includes the NIC 212, which may also be referred to as a host fabric interface (HFI) in some embodiments (e.g., high performance computing (HPC) environments). The NIC 212 may be embodied as one or more add-in-boards, daughtercards, network interface cards, controller chips, chipsets, or other devices that may be used by the intermediary compute device 106 to connect with another compute device (e.g., the source compute device 102). In some embodiments, the NIC 212 may be embodied as part of a SoC that includes one or more processors, or included on a multichip package that also contains one or more processors. In some embodiments, the NIC 212 may include a local processor (not shown) and/or a local memory (not shown) that are both local to the NIC 212. In such embodiments, the local processor of the NIC 212 may be capable of performing one or more of the functions of a processor 202 described herein. Additionally or alternatively, in such embodiments, the local memory of the NIC 212 may be integrated into one or more components of the intermediary compute device 106 at the board level, socket level, chip level, and/or other levels.

The one or more peripheral devices 214 may include any type of device that is usable to input information into the intermediary compute device 106 and/or receive information from the intermediary compute device 106. The peripheral devices 214 may be embodied as any auxiliary device usable to input information into the intermediary compute device 106, such as a keyboard, a mouse, a microphone, a barcode reader, an image scanner, etc., or output information from the intermediary compute device 106, such as a display, a speaker, graphics circuitry, a printer, a projector, etc. It should be appreciated that, in some embodiments, one or more of the peripheral devices 214 may function as both an input device and an output device (e.g., a touchscreen display, a digitizer on top of a display screen, etc.). It should be further appreciated that the types of peripheral devices 214 connected to the intermediary compute device 106 may depend on, for example, the type and/or intended use of the intermediary compute device 106. Additionally or alternatively, in some embodiments, the peripheral devices 214 may include one or more ports, such as a USB port, for example, for connecting external peripheral devices to the intermediary compute device 106.

The source compute device 102 and the destination compute device 108 may be embodied as any type of computation or computer device capable of performing the functions described herein, including, without limitation, a smartphone, a mobile computing device, a tablet computer, a laptop computer, a notebook computer, a computer, a server (e.g., stand-alone, rack-mounted, blade, etc.), a sled (e.g., a compute sled, an accelerator sled, a storage sled, a memory sled, etc.), a network appliance (e.g., physical or virtual), a web appliance, a distributed computing system, a processor-based system, and/or a multiprocessor system. While not illustratively shown, it should be appreciated that each of source compute device 102 and the destination compute device 108 includes similar and/or like components to those of the illustrative intermediary compute device 106. As such, figures and descriptions of the like components are not repeated herein for clarity of the description with the understanding that the description of the corresponding components provided above in regard to the intermediary compute device 106 applies equally to the corresponding components of the source compute device 102 and the destination compute device 108, as applicable. Of course, it should be appreciated that the source compute device 102 and the destination compute device 108 may include additional and/or alternative components, depending on the embodiment.

The network 104 may be embodied as any type of wired or wireless communication network, including but not limited to a wireless local area network (WLAN), a wireless personal area network (WPAN), an edge network (e.g., a multi-access edge computing (MEC) network), a fog network, a cellular network (e.g., Global System for Mobile Communications (GSM), Long-Term Evolution (LTE), 5G, etc.), a telephony network, a digital subscriber line (DSL) network, a cable network, a local area network (LAN), a wide area network (WAN), a global network (e.g., the Internet), or any combination thereof. It should be appreciated that, in such embodiments, the network 104 may serve as a centralized network and, in some embodiments, may be communicatively coupled to another network (e.g., the Internet). Accordingly, the network 104 may include a variety of other virtual and/or physical network computing devices (e.g., routers, switches, network hubs, servers, storage devices, compute devices, etc.), as needed to facilitate communication between the intermediary compute device 106 and the source compute device 102, and the intermediary compute device 106 and the destination compute device 108, which are not shown to preserve clarity of the description.

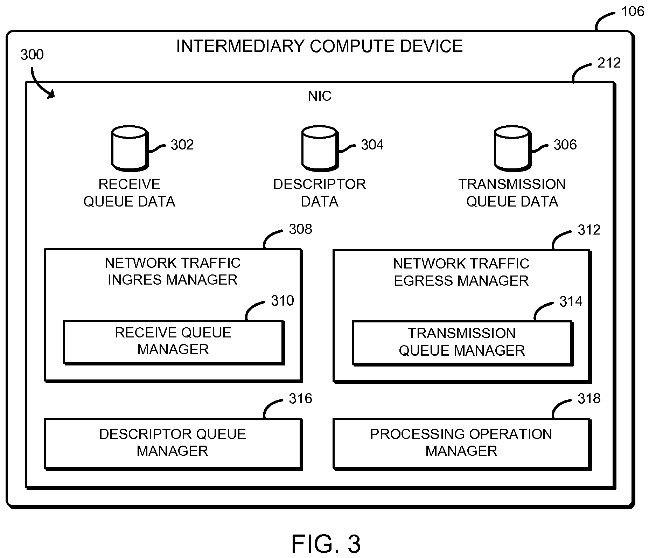

Referring now to FIG. 3, in use, the intermediary compute device 106 establishes an environment 300 during operation. The illustrative environment 300 includes a network traffic ingress manager 308, a network traffic egress manager 312, a descriptor queue manager 316, and a processing operation manager 318. The various components of the environment 300 may be embodied as hardware, firmware, software, or a combination thereof. As such, in some embodiments, one or more of the components of the environment 300 may be embodied as circuitry or collection of electrical devices (e.g., network traffic ingress management circuitry 308, network traffic egress management circuitry 312, descriptor queue management circuitry 316, processing operation management circuitry 318, etc.).

It should be appreciated that, in such embodiments, one or more of the circuits (e.g., network traffic ingress management circuitry 308, network traffic egress management circuitry 312, descriptor queue management circuitry 316, processing operation management circuitry 318, etc.) may form a portion of one or more of the compute engine 200 (i.e., the processor(s) 208 and/or the memory 204), the I/O subsystem 206, the network interface controller 212, the data storage device(s) 208, an application specific integrated circuit (ASIC), a programmable circuit such as a field-programmable gate array (FPGA), and/or other components of the intermediary compute device 106.

For example, as illustratively shown, the network traffic ingress management circuitry 308, the network traffic egress management circuitry 312, the descriptor queue management circuitry 316, and the processing operation management circuitry 318 form a portion of the NIC 212. However, it should be appreciated that, in other embodiments, one or more functions described herein as being performed by the network traffic ingress management circuitry 308, the network traffic egress management circuitry 312, the descriptor queue management circuitry 316 and/or the processing operation management circuitry 318 may be performed, at least in part, by one or more other components of the intermediary compute device 106, such as the compute engine 200, the I/O subsystem 206, the communication circuitry 210, and/or other components of the intermediary compute device 106. It should be further appreciated that associated instructions may be stored in the memory 204, the data storage device 208, and/or other data storage location, which may be executed by the processor 202 and/or other computational processor.

Additionally, in some embodiments, one or more of the illustrative components may form a portion of another component and/or one or more of the illustrative components may be independent of one another. Further, in some embodiments, one or more of the components of the environment 300 may be embodied as virtualized hardware components or emulated architecture, which may be established and maintained by the NIC 212, the compute engine 200, or other software/hardware components of the intermediary compute device 106. It should be further appreciated that some of the functionality of one or more of the components of the environment 300 may require a hardware implementation, in which case embodiments of components which implement such functionality will be embodied at least partially as hardware. It should be appreciated that the intermediary compute device 106 may include other components, sub-components, modules, sub-modules, logic, sub-logic, and/or devices commonly found in a computing device (e.g., device drivers, interfaces, etc.), which are not illustrated in FIG. 3 for clarity of the description.

In the illustrative environment 300, the intermediary compute device 106 additionally includes receive queue data 302, descriptor data 304, and transmission queue data 306, each of which may be accessed by the various components and/or sub-components of the intermediary compute device 106. Further, each of the receive queue data 302, the descriptor data 304, and the transmission queue data 306 may be accessed by the various components of the intermediary compute device 106. Additionally, it should be appreciated that in some embodiments the data stored in, or otherwise represented by, each of the receive queue data 302, the descriptor data 304, and the transmission queue data 306 may not be mutually exclusive relative to each other. For example, in some implementations, data stored in the descriptor data 304 may also be stored as a portion of the receive queue data 302 and/or the transmission queue data 306, or in another alternative arrangement. As such, although the various data utilized by the intermediary compute device 106 is described herein as particular discrete data, such data may be combined, aggregated, and/or otherwise form portions of a single or multiple data sets, including duplicative copies, in other embodiments.

The network traffic ingress manager 308, which may be embodied as hardware, firmware, software, virtualized hardware, emulated architecture, and/or a combination thereof as discussed above, is configured to receive inbound network traffic. To do so, the network traffic ingress manager 308 is configured to facilitate inbound network communications (e.g., network traffic, network packets, network flows, etc.) to the intermediary compute device 106, such as may be received from the source compute device 102. Accordingly, the network traffic ingress manager 308 is configured to manage (e.g., create, modify, delete, etc.) connections to physical and virtual network ports (i.e., virtual network interfaces) of the intermediary compute device 106 (e.g., via the communication circuitry 210). The illustrative network traffic ingress manager 308 includes a receive queue manager 310 configured to manage the ingress buffers/queues of the intermediary compute device 106. Additionally, the network traffic ingress manager 308 is configured to associate a descriptor with each received network packet.

The network traffic ingress manager is further configured to generate a sequence identifier for each received network packet and insert the generated sequence identifier into an associated descriptor. As described previously, the sequence identifier may be any type of data usable to identify an order of a received network packet relative to other previously received and/or future received network packets, such as a timestamp, a sequence number, a value of an incremented counter, etc. In some embodiments, the network traffic ingress manager 308 may be configured to generate the sequence identifier based on a flow or other characteristic of a received network packet. Accordingly, in such embodiments, the network traffic ingress manager 308 is further configured to identify the flow or other characteristic of the received network packet which is usable to generate the sequence identifier corresponding thereto. For example, in such embodiments in which value of a counter is used, it should be appreciated that one or more flows may be assigned to a particular counter.

In some embodiments, at least a portion of the network packet (e.g., at least a portion of a header of the network packet, at least a portion of a payload of the network packet, at least a portion of a footer of the network packet, etc.) may be stored in a buffer local to the NIC 212 and/or a host buffer external to the NIC 212 (e.g., via a DMA operation). Additionally or alternatively, in some embodiments, information about the network packet (e.g., a flow/workload type of the network packet, a source of the network packet, a destination of the network packet, a protocol associated with the network packet, etc.) may be stored in the receive queue data 302, the descriptor data 304, and/or the transmission queue data 306.

The network traffic egress manager 312, which may be embodied as hardware, firmware, software, virtualized hardware, emulated architecture, and/or a combination thereof as discussed above, is configured to route/transmit outbound network traffic. To do so, the network traffic egress manager 312 is configured to facilitate outbound network communications (e.g., network traffic, network packet streams, network flows, etc.) from the intermediary compute device 106, such as may be transmitted to the destination compute device 108. To do so, the network traffic egress manager 312 is configured to manage (e.g., create, modify, delete, etc.) connections to physical and virtual network ports/interfaces of the intermediary compute device 106 (e.g., via the communication circuitry 210). The illustrative network traffic egress manager 312 includes a transmission queue manager 310 configured to manage the egress buffers/queues of the intermediary compute device 106.

Additionally, the network traffic egress manager 312 is configured to move descriptors of network packets that are to be transmitted into an appropriate transmission queue of descriptors, such as may be performed by the descriptor queue manager 316. To do so, the network traffic egress manager 312 is configured to identify whether any processing operations to be performed on at least a portion of the network packet have completed (e.g., based on a completion flag, having received a status indicator/message, the network packet being placed in a completion queue, etc.). The network traffic egress manager 312 is further configured to transmit the network packets from the intermediary compute device 106 in order based on the transmission queue. Accordingly, the network traffic egress manager 312 is additionally configured to initiate a reordering operation on the descriptor transmission queue(s), such as may be performed by the descriptor queue manager 316.

The descriptor queue manager 316, which may be embodied as hardware, firmware, software, virtualized hardware, emulated architecture, and/or a combination thereof as discussed above, is configured to manage the one or more descriptor queues of the intermediary compute device 106. In some embodiments, the descriptor information (i.e., sequence identifiers, data buffer location(s), control information, etc.) may be stored in the descriptor data 304. In some embodiments, the descriptors may be stored in one or more descriptor ring data structures (i.e., circular buffer queues). Accordingly, in such embodiments, the information associated therewith (e.g., head/tail information, starting location of the receive descriptor ring, a length of the descriptor ring, etc.) may be stored in the descriptor data 304.

The processing operation manager 318, which may be embodied as hardware, firmware, software, virtualized hardware, emulated architecture, and/or a combination thereof as discussed above, is configured to manage the performance of any operations which are to be performed on at least a portion of received network packets between ingress and egress. To do so, the processing operation manager 318 may be configured to retrieve information from a received network packet and/or an associated descriptor (e.g., in a control information field) to identify which operation(s) (e.g., pre-processing and/or offloaded operation(s)) are to be performed on at least a portion of the data of a received network packet.

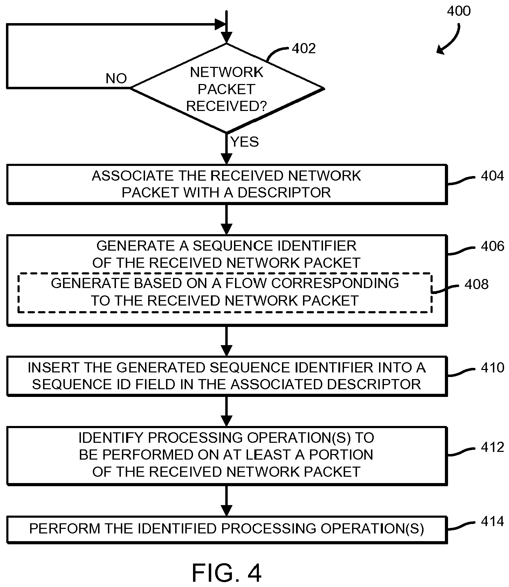

Referring now to FIG. 4, a method 400 for processing a network packet on ingress is shown which may be executed by a compute device (e.g., the intermediary compute device 106 of FIGS. 1-3), or more particularly by a NIC of the compute device (e.g., the NIC 212 of FIGS. 2 and 3). The method 400 begins with block 402, in which the NIC 212 determines whether a network packet has been received (e.g., from the source compute device 102 of FIG. 1). If so, the method 400 advances to block 404, in which the NIC 212 associates the received network packet with a descriptor from a pool of available descriptors. It should be appreciated that, prior to the method 400 being executed (i.e., before a descriptor is associated), the NIC 212 has previously allocated the pool of available descriptors that can be configured to be associated with the received network packet.

In block 406, the NIC 212 generates a sequence identifier of the received network packet. As described previously, the sequence identifier may be any type of data usable to identify an order of a received network packet relative to other previously received and/or future received network packets, such as a timestamp, a sequence number, a value of an incremented counter, etc. To generate the sequence identifier, for example, in block 408 the NIC 212 may generate the sequence identifier based on a flow corresponding to the received network packet. Accordingly, it should be appreciated that, in such embodiments, the NIC 212 is configured to identify a flow associated with the received network packet, such as may be determined based on data included in the header and/or payload of the network packet. In block 410, the NIC 212 inserts the generated sequence identifier into a sequence identifier field in the associated descriptor.

In block 412, the NIC 212 identifies one or more processing operations that are to be performed on at least a portion of the received network packet. In block 414, the NIC 212 performs the identified processing operation(s). It should be appreciated that, in some embodiments, one or more functions associated with the processing operations may be performed by a component of the NIC 212 (e.g., a local processor, a local accelerator, etc.) and/or offloaded to another component of the intermediary compute device 106 (e.g., the compute engine 200 of FIG. 2), such as may be required to perform operation(s) on one or more virtual machines of the intermediary compute device 106.

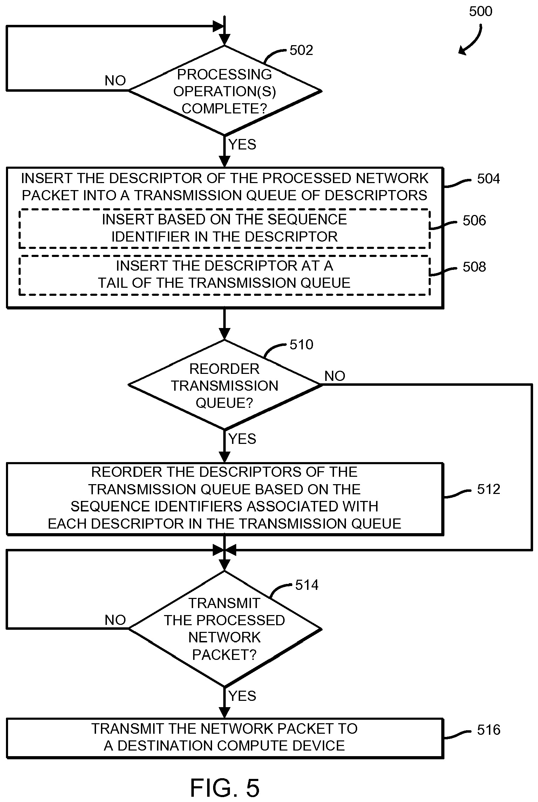

Referring now to FIG. 5, a method 500 for managing the transmission of a network packet on egress is shown which may be executed by a compute device (e.g., the intermediary compute device 106 of FIGS. 1-3), or more particularly by a NIC of the compute device (e.g., the NIC 212 of FIGS. 2 and 3) or a device driver associated therewith. It should be appreciated that the descriptor has been previously associated with the network packet to be transmitted, a sequence identifier has been generated and inserted into the associated descriptor, and any operations have been previously performed thereon (e.g., as described above with regard to the method 400 of FIG. 4), such that the network packet is now ready for transmission to a destination compute device (e.g., the destination compute device 108 of FIG. 1). In block 502, the NIC 212 determines whether any processing operations determined to be performed on at least a portion of the network data have completed. If so, the method 500 advances to block 504.

In block 504, the NIC 212 inserts the descriptor associated with the processed network packet into a transmission queue of descriptors. For example, in block 506, the NIC 212 may insert the descriptor associated with the processed network packet into the transmission queue based on the sequence identifier of the descriptor relative to the sequence identifiers of the descriptors presently queued in the transmission queue. In another example, in block 508, the NIC 212 may insert the descriptor at a tail of the transmission queue. In block 510, the NIC 212 determines whether to reorder the transmission queue, such as in those embodiments in which the NIC 212 inserts the descriptor at the tail of the transmission queue.

If the NIC 212 determines not to reorder the transmission queue (e.g., the NIC 212 inserted the descriptor into the transmission queue based on the sequence identifier of the inserted descriptor), the method jumps to block 516, which is described below. It should be appreciated that, in some embodiments, a flow indicator may be used such that the out of order processing and reordering is only performed within a given flow, or only on certain flows. Otherwise, if the NIC 212 determines to reorder the transmission queue in block 510, method 500 proceeds to block 512, in which the NIC 212 reorders the descriptors of the transmission queue based on the sequence identifiers associated with each descriptor in the transmission queue such that the sequence identifiers are sorted in the queue in order from smallest (i.e., at the head of the queue) to largest (i.e., at the tail of the queue). It should be appreciated that, while illustratively described herein as being performed by the NIC 212, the reordering operation may be offloaded to another component of the intermediary compute device 106, such as an I/O device, an accelerator, etc.

In block 514, the NIC 212 determines whether to transmit the processed network packet based on whether the descriptor associated with the processed network packet is at the head of the transmission queue. If so, the method 500 advances to block 516, in which the NIC 212 transmits the network packet to a destination compute device (e.g., the destination compute device 108 of FIG. 1).

### EXAMPLES

Illustrative examples of the technologies disclosed herein are provided below. An embodiment of the technologies may include any one or more, and any combination of, the examples described below.
Example 1 includes a network interface controller (NIC) for reordering network packets on egress, the NIC comprising network traffic ingress management circuitry to associate a network packet, received by the NIC, with a descriptor, generate a sequence identifier for the received network packet, and insert the generated sequence identifier into the associated descriptor, network traffic egress management circuitry to determine whether the received network packet is to be transmitted from a compute device associated with the NIC to another compute device, insert, in response to a determination that the received network packet is to be transmitted to the another compute device, the descriptor into a transmission queue of descriptors, and transmit the network packet based on position of the descriptor in the transmission queue of descriptors based on the generated sequence identifier.
Example 2 includes the subject matter of Example 1, and wherein the network traffic ingress management circuitry is further to identify a flow associated with the received network packet, wherein to generate the sequence identifier of the received network packet comprises to generate the sequence identifier of the received network packet based on the identified flow.
Example 3 includes the subject matter of any of Examples 1 and 2, and wherein to insert the descriptor into the transmission queue of descriptors comprises to insert the descriptor into the transmission queue of descriptors based on the generated sequence identifier of the descriptor.
Example 4 includes the subject matter of any of Examples 1-3, and wherein to insert the descriptor into the transmission queue of descriptors comprises to insert the descriptor at a tail of the transmission queue of descriptors.
Example 5 includes the subject matter of any of Examples 1-4, and wherein the network traffic egress management circuitry is further to reorder the transmission queue of descriptors based on sequence identifiers of each descriptor in the transmission queue of descriptors.
Example 6 includes the subject matter of any of Examples 1-5, and further including processing operation management circuitry to orchestrate the performance of one or more processing operations on at least a portion of the received network packet, and wherein to determine whether the received network packet is to be transmitted from the compute device to the other compute device comprises to determine that the one or more processing operations have been performed.
Example 7 includes the subject matter of any of Examples 1-6, and wherein to insert the generated sequence identifier into the associated descriptor comprises to insert the generated sequence identifier into a predefined sequence identifier field of the associated descriptor.
Example 8 includes the subject matter of any of Examples 1-7, and wherein to generate the sequence identifier comprises to generate one of a timestamp, a sequence number, or a value of an incremented counter.
Example 9 includes one or more machine-readable storage media comprising a plurality of instructions stored thereon that, in response to being executed, cause a network interface controller (NIC) to associate a network packet, received by the NIC, with a descriptor; generate a sequence identifier for the received network packet; insert the generated sequence identifier into the associated descriptor; determine whether the received network packet is to be transmitted from a compute device associated with the NIC to another compute device; insert, in response to a determination that the received network packet is to be transmitted to the another compute device, the descriptor into a transmission queue of descriptors; and transmit the network packet based on position of the descriptor in the transmission queue of descriptors based on the generated sequence identifier.
Example 10 includes the subject matter of Example 9, and wherein the plurality of instructions further cause the NIC to identify a flow associated with the received network packet, wherein to generate the sequence identifier of the received network packet comprises to generate the sequence identifier of the received network packet based on the identified flow.
Example 11 includes the subject matter of any of Examples 9 and 10, and wherein to insert the descriptor into the transmission queue of descriptors comprises to insert the descriptor into the transmission queue of descriptors based on the generated sequence identifier of the descriptor.
Example 12 includes the subject matter of any of Examples 9-11, and wherein to insert the descriptor into the transmission queue of descriptors comprises to insert the descriptor at a tail of the transmission queue of descriptors.
Example 13 includes the subject matter of any of Examples 9-12, and wherein the plurality of instructions further cause the NIC to reorder the transmission queue of descriptors based on sequence identifiers of each descriptor in the transmission queue of descriptors.
Example 14 includes the subject matter of any of Examples 9-13, and wherein the plurality of instructions further cause the NIC to orchestrate the performance of one or more processing operations on at least a portion of the received network packet, and wherein to determine whether the received network packet is to be transmitted from the compute device to the other compute device comprises to determine that the one or more processing operations have been performed.
Example 15 includes the subject matter of any of Examples 9-14, and wherein to insert the generated sequence identifier into the associated descriptor comprises to insert the generated sequence identifier into a predefined sequence identifier field of the associated descriptor.
Example 16 includes the subject matter of any of Examples 9-15, and wherein to generate the sequence identifier comprises to generate one of a timestamp, a sequence number, or a value of an incremented counter.
Example 17 includes a method for reordering network packets on egress, the method comprising associating, by a network interface controller (NIC), a network packet, received by the NIC, with a descriptor; generating, by the NIC, a sequence identifier for the received network packet; inserting, by the NIC, the generated sequence identifier into the associated descriptor; determining, by the NIC, whether the received network packet is to be transmitted from a compute device associated with the NIC to another compute device; inserting, by the NIC and in response to a determination that the received network packet is to be transmitted to the another compute device, the descriptor into a transmission queue of descriptors; and transmitting, by the NIC, the network packet based on position of the descriptor in the transmission queue of descriptors based on the generated sequence identifier.
Example 18 includes the subject matter of Example 17, and further including identifying, by the NIC, a flow associated with the received network packet, wherein generating the sequence identifier of the received network packet comprises to generate the sequence identifier of the received network packet based on the identified flow.
Example 19 includes the subject matter of any of Examples 17 and 18, and wherein inserting the descriptor into the transmission queue of descriptors comprises inserting the descriptor into the transmission queue of descriptors based on the generated sequence identifier of the descriptor.
Example 20 includes the subject matter of any of Examples 17-19, and wherein inserting the descriptor into the transmission queue of descriptors comprises to insert the descriptor at a tail of the transmission queue of descriptors.
Example 21 includes the subject matter of any of Examples 17-20, and further including reordering, by the NIC, the transmission queue of descriptors based on sequence identifiers of each descriptor in the transmission queue of descriptors.
Example 22 includes the subject matter of any of Examples 17-21, and further including orchestrating, by the NIC, the performance of one or more processing operations on at least a portion of the received network packet, wherein determining whether the received network packet is to be transmitted from the compute device to the other compute device comprises to determine that the one or more processing operations have been performed.
Example 23 includes the subject matter of any of Examples 17-22, and wherein inserting the generated sequence identifier into the associated descriptor comprises inserting the generated sequence identifier into a predefined sequence identifier field of the associated descriptor.
Example 24 includes the subject matter of any of Examples 17-23, and wherein generating the sequence identifier comprises to generating one of a timestamp, a sequence number, or a value of an incremented counter.
Example 25 includes a network interface controller (NIC) for reordering network packets on egress, the NIC comprising circuitry for associating a network packet, received by the NIC, with a descriptor; means for generating a sequence identifier for the received network packet; means for inserting the generated sequence identifier into the associated descriptor; circuitry for determining whether the received network packet is to be transmitted from a compute device associated with the NIC to another compute device; means for inserting, in response to a determination that the received network packet is to be transmitted to the another compute device, the descriptor into a transmission queue of descriptors; and circuitry for transmitting the network packet based on position of the descriptor in the transmission queue of descriptors based on the generated sequence identifier.

## Claims

1. A network interface controller (NIC) for reordering network packets on egress, the NIC comprising:
network traffic ingress management circuitry to:
associate a network packet, received by the NIC, with a descriptor,
generate a sequence identifier for the received network packet, and
insert the generated sequence identifier into the associated descriptor,
network traffic egress management circuitry to:
determine whether the received network packet is to be transmitted from a compute device associated with the NIC to another compute device,
insert, in response to a determination that the received network packet is to be transmitted to the another compute device, the descriptor into a transmission queue of descriptors, and
transmit the network packet based on position of the descriptor in the transmission queue of descriptors based on the generated sequence identifier.

2. The network interface controller of claim 1, wherein the network traffic ingress management circuitry is further to identify a flow associated with the received network packet, wherein to generate the sequence identifier of the received network packet comprises to generate the sequence identifier of the received network packet based on the identified flow.

3. The network interface controller of claim 1, wherein to insert the descriptor into the transmission queue of descriptors comprises to insert the descriptor into the transmission queue of descriptors based on the generated sequence identifier of the descriptor.

4. The network interface controller of claim 1, wherein to insert the descriptor into the transmission queue of descriptors comprises to insert the descriptor at a tail of the transmission queue of descriptors, and
wherein the network traffic egress management circuitry is further to reorder the transmission queue of descriptors based on sequence identifiers of each descriptor in the transmission queue of descriptors.

5. The network interface controller of claim 1, further comprising processing operation management circuitry to orchestrate the performance of one or more processing operations on at least a portion of the received network packet, and wherein to determine whether the received network packet is to be transmitted from the compute device to the other compute device comprises to determine that the one or more processing operations have been performed.

6. The network interface controller of claim 1, wherein to insert the generated sequence identifier into the associated descriptor comprises to insert the generated sequence identifier into a predefined sequence identifier field of the associated descriptor.

7. The network interface controller of claim 1, wherein to generate the sequence identifier comprises to generate one of a timestamp, a sequence number, or a value of an incremented counter.

8. A method for reordering network packets on egress, the method comprising:
associating, by a network interface controller (NIC), a network packet, received by the NIC, with a descriptor;
generating, by the NIC, a sequence identifier for the received network packet;
inserting, by the NIC, the generated sequence identifier into the associated descriptor;
determining, by the NIC, whether the received network packet is to be transmitted from a compute device associated with the NIC to another compute device;
inserting, by the NIC and in response to a determination that the received network packet is to be transmitted to the another compute device, the descriptor into a transmission queue of descriptors; and
transmitting, by the NIC, the network packet based on position of the descriptor in the transmission queue of descriptors based on the generated sequence identifier.

9. The method of claim 8, further comprising identifying, by the NIC, a flow associated with the received network packet, wherein generating the sequence identifier of the received network packet comprises to generate the sequence identifier of the received network packet based on the identified flow.

10. The method of claim 8, wherein inserting the descriptor into the transmission queue of descriptors comprises inserting the descriptor into the transmission queue of descriptors based on the generated sequence identifier of the descriptor.

11. The method of claim 8, wherein inserting the descriptor into the transmission queue of descriptors comprises to insert the descriptor at a tail of the transmission queue of descriptors, and further comprising reordering, by the NIC, the transmission queue of descriptors based on sequence identifiers of each descriptor in the transmission queue of descriptors.

12. The method of claim 8, further comprising orchestrating, by the NIC, the performance of one or more processing operations on at least a portion of the received network packet, wherein determining whether the received network packet is to be transmitted from the compute device to the other compute device comprises to determine that the one or more processing operations have been performed.

13. The method of claim 8, wherein inserting the generated sequence identifier into the associated descriptor comprises inserting the generated sequence identifier into a predefined sequence identifier field of the associated descriptor.

14. One or more machine-readable storage media comprising a plurality of instructions stored thereon that, when executed, causes a network interface controller to perform the method of any of claims 8-13.

15. A network interface controller (NIC) for reordering network packets on egress, the NIC comprising means for performing the method of any of claims 8-13.
